# FASCICULE DE BREVET EUROPEEN

(11) **EP 1 290 806 B1**
(45) Date de publication et mention de la délivrance du brevet: **06.05.2009**
(21) Numéro de dépôt: 01945412.3
(22) Date de dépôt: 13.06.2001
(51) Int. Cl.: H04B 1/707, H04J 11/00

(54) **GENERATEUR DE JEUX REPETITIFS DE SEQUENCES D'ETALEMENT.**
GENERATOR VON WIEDERHOLENDEN SPREIZFOLGESÄTZEN
GENERATOR OF REPETITIVE SETS OF SPREAD SPECTRUM SEQUENCES

(30) Priorité: 14.06.2000 FR 0007561
(43) Date de publication de la demande: 12.03.2003
(73) Titulaire: Commissariat à l'Energie Atomique, 75015 Paris (FR)
(72) Inventeur: DANIELE, Norbert, F-38330 MONTBONNOT (FR); NOGUET, Dominique, F-38100 GRENOBLE (FR); LIONTI, Rosolino, F-38180 SEYSSINS (FR); LEQUEPEYS, Jean-René, F-38600 FONTAINE (FR)
(74) Mandataire: Viering, Hans-Martin
(86) Numéro de dépôt international: PCT/FR2001/001828
(87) Numéro de publication internationale: WO 2001/097398

(56) Documents cités:
- US-A- 5 790 591
- US-A- 5 815 526

## Description

### Domaine technique

La présente invention a pour objet un générateur de jeux répétitifs de séquences d'étalement.

L'invention trouve une application générale dans les communications numériques et plus particulièrement dans les réseaux locaux sans fil (WLAN), dans les boucles locales d'abonnés sans fil (WLL), en téléphonie mobile, en domotique, en télécollecte, en communication dans les transports, en télévision câblée, dans les services multimédia sur les réseaux câblés, etc...

### Etat de la technique antérieure

La technique d'étalement de spectre est largement connue et décrite, notamment, dans les deux ouvrages suivants :
- Andrew J. VITERBI : "CDMA-Principles of Spread Spectrum Communication" Addison-Wesley Wireless Communications Series, 1975,
- John G. PROAKIS : "Digital Communications" McGraw-Hill International Editions, 3ème édition, 1995.

Dans un mode particulier de mise en oeuvre de cette technique, dite modulation orthogonale d'ordre M ou, en abrégé, MOK ("M-ary Orthogonal Keying"), on associe à chaque symbole numérique à émettre un signal pris parmi un ensemble de signaux orthogonaux. Ces signaux peuvent être des séquences d'étalement d'une même famille de séquences orthogonales. Dans ce cas, la modulation réalise aussi l'étalement. Mais ces signaux peuvent aussi ne pas être parfaitement orthogonaux.

Si un symbole est constitué de m bits, il existe 2^{m} configurations possibles pour les différents symboles. Le nombre M de séquences disponibles doit donc être au moins égal à 2^{m}. Si la longueur de ces séquences est N, on sait qu'on peut trouver au maximum N séquences orthogonales. On a donc M=N et le nombre de bits par symbole est limité à log₂N.

La technique MOK connaît une variante dite MBOK ("M-ary Bi-Orthogonal Keying") consistant à ajouter au jeu de signaux orthogonaux utilisés dans une modulation MOK leurs opposés pour constituer un jeu de 2M signaux, qui ne sont évidemment plus tous orthogonaux entre eux. La démodulation utilise encore M corrélateurs, adaptés à chacune des M séquences orthogonales mais nécessite en outre des moyens de récupération du signe.

Dans la demande de brevet français n°99 08308 du 29 juin 1999, le présent Demandeur a décrit et revendiqué une variante dite multi-MOK ou M-MOK en abrégé. Selon cette variante, on multiplie les opérations de modulation/démodulation MOK pour traiter une pluralité de blocs de données. Naturellement, cela accroît le nombre de séquences, mais cela augmente aussi (et très sensiblement) le débit d'information.

Le document US 5,815,526 décrit un générateur de jeux répétitifs de séquences d'étalement comprenant des moyens de comptage et de mise en forme d'une adresse en deux parties. La première partie de l'adresse adresse une table comprenant des nombres correspondant aux séquences d'étalement. La deuxième partie de l'adresse décide de la polarité de la séquence.

Enfin, dans sa demande N°99 09947 du 30 juillet 1999, le présent Demandeur a décrit et revendiqué un procédé utilisant des jeux répétitifs de séquences d'étalement. Dans cette technique, destinée à réduire les risques d'interférences entre symbole, on traite les symboles successifs avec des séquences pseudo-aléatoires différentes ce qui permet, à la réception, de mieux discriminer les signaux reçus. Le nombre de séquences successives différentes est limité à un nombre S fixé. Au-delà de S séquences, on réutilise les séquences déjà utilisées. Autrement dit, on traite des paquets de S symboles par des jeux répétitifs de S séquences. Il en résulte que l'intervalle de temps au bout duquel on retrouve la même séquence pseudo-aléatoire est S.Ts si Ts est la durée d'un symbole. En terme de débit, cela signifie qu'à étalement donné, le débit autorisé est S fois plus élevé que dans l'art antérieur.

Ce procédé, qui consiste à traiter des paquets de S symboles par des jeux répétitifs de S séquences pseudo-aléatoires, peut être perfectionné en traitant en parallèle L paquets de S symboles, avec L jeux de S séquences différentes soit au total LS séquences.

Dans la dernière demande citée, on obtient les jeux de séquences par lecture d'une table (référence 50 dans la demande) contenant LS séquences pseudo-aléatoires notées Cij et, pour cela, on adresse cette table par L adresses en parallèle et on recueille, sur L sorties en parallèle, les L jeux de séquences souhaités. Il reste ensuite à étaler les symboles Sij par les séquences Cij correspondantes.

La présente invention a pour but de perfectionner ce générateur de jeux de séquences d'étalement.

### Exposé de l'invention

Selon l'invention, l'adresse formée n'est plus seulement constituée des q bits des symboles à traiter (comme c'est le cas en technique MOK où les q bits adressent l'une des 2^{q} séquences) mais elle comprend des bits supplémentaires correspondant aux S séquences. Pour adresser S séquences différentes, il faut log₂S bits supplémentaires, l'adresse doit donc comprendre au total q+log₂S bits.

De façon plus précise, la présente invention a pour objet un générateur de jeux répétitifs de séquences d'étalement pour la transmission de symboles par étalement de spectre, caractérisé en ce qu'il comprend :
a) des moyens de comptage et de mise en forme d'une adresse comprenant :
   - une entrée recevant les symboles à traiter,
   - une entrée de synchronisation recevant des impulsions synchronisés avec les symboles,
   - des moyens de comptage du nombre de symboles reçus et de mise en forme d'une adresse, cette adresse comprenant une première partie constituée d'un nombre q de bits, q étant le nombre de bits de chaque symbole, et une seconde partie constituée d'un nombre r de bits avec r=log₂S, où S désigne le nombre de séquences dans un jeu de séquences, l'adresse comprenant ainsi un nombre p de bits avec p=q+log₂S,
   - une sortie délivrant cette adresse pour chaque entrée d'un symbole appliqué aux moyens,
b) une table de séquences comprenant un nombre L de blocs (avec L=2^{q}), chaque bloc mémorisant un jeu de S séquences, cette table étant adressée par l'adresse délivrée par les moyens de comptage et d'adressage, la première partie de l'adresse sélectionnant un jeu parmi L et la seconde partie une séquence dans ce jeu.

### Brève description des dessins

La figure unique est un schéma synoptique du générateur de l'invention.

### Description d'un mode particulier de réalisation

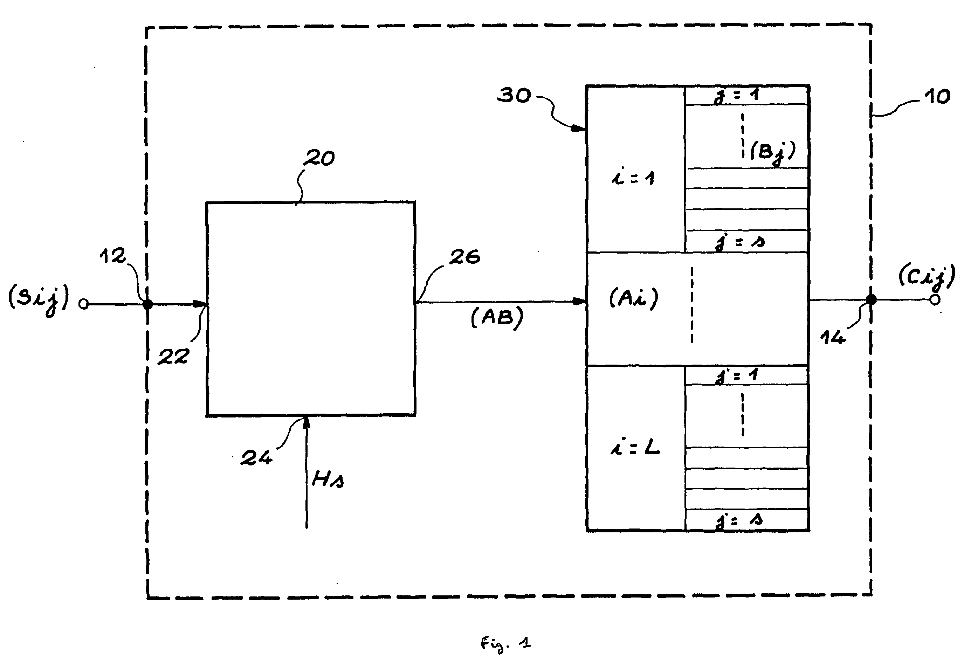

Sur la figure 1, on voit un générateur 10 conforme à l'invention avec une entrée générale 12 recevant des symboles numériques Sij et une sortie 14 délivrant des séquences d'étalement Cij. Ce générateur 10 comprend essentiellement des moyens 20 de comptage et de mise en forme d'une adresse et une table 30 contenant L jeux de S séquences.

Les moyens 20 comprennent une entrée 22 recevant les symboles Sij à traiter et une entrée de synchronisation 24 recevant des impulsions Hs synchronisées avec les symboles.

L'adresse mise en forme par les moyens 20 comprend une première partie A constituée de q bits, q étant le nombre de bits de chaque symbole, et une seconde partie B constituée d'un nombre r de bits avec r=log₂S, où S désigne le nombre de séquences dans un jeu de codes. L'adresse AB comprend ainsi un nombre p de bits avec p=q+log₂S. Cette adresse a donc été allongée par rapport aux techniques antérieures où elles ne comprenaient que q bits.

Les moyens 20 comprennent encore une sortie 26 délivrant l'adresse à la table 30 qui suit.

Cette table 30 comprend un nombre L de blocs Ai où l'indice i va de 1 à 2^{q}, chaque bloc mémorisant un jeu de S séquences Bj où j va de 1 à S. La première partie A de l'adresse va donc sélectionner un bloc Ai parmi L et la seconde partie B une séquence Bj dans ce jeu. Finalement, l'adresse (AB) permet de sélectionner une séquence Cij parmi LS. La sortie 14 délivre ces séquences.

On peut, par exemple, travailler à partir d'une modulation QPSK simple (2 bits par symbole) sur des symboles à 4 bits par symbole (q=4) ce qui correspond à 4 blocs Ai 2 bits MOK, et prendre des jeux de S=4 séquences soit 16 séquences au total, ce qui conduit à r=log₂S=3. Les adresses auront alors un nombre de bits égal à 2+2=4.

Dans une modulation utilisant le générateur de l'invention, on utilise un jeu de codes répétitif et le séquencement de ces codes est connu en réception. Moyennant une bonne synchronisation, on peut donc a priori connaître dans chacun des jeux, le code à venir. Ainsi, le nombre de filtres adaptés nécessaires à la partie saut de code n'est plus S mais 1 dans le cas d'une modulation à étalement de spectre par séquence directe avec saut de code simple, et 2^{q} dans le cas d'une modulation à saut de code de type MOK, ou encore N.2^{q} dans le cas d'une modulation multi code avec saut de code et MOK. De plus, pour simplifier la réalisation, il est possible d'utiliser des corrélateurs glissants plutôt que des filtres adaptés. Ces corrélateurs glissants peuvent être pilotés par un filtre adapté chargé de la synchronisation comme décrit dans le document FR-A-2 779 590.

Si l'on reprend l'exemple de la modulation à saut de code et MOK, sans réduction de complexité, il est nécessaire de disposer de S.2^{q} filtres adaptés pour démoduler les données en réception, avec la réduction de complexité entraînée par la présente invention, 2^{q} corrélateurs glissants et un filtre adapté suffisent.

## Revendications

1. Générateur de jeux répétitifs de séquences d'étalement pour la transmission de symboles par étalement de spectre, **caractérisé en ce qu'**il comprend :
a) des moyens de comptage et de mise en forme d'une adresse (20) comprenant :
- une entrée (22) recevant les symboles à traiter (Sij),
- une entrée de synchronisation (24) recevant des impulsions (Hs) synchronisés avec les symboles,
- des moyens de comptage du nombre de symboles reçus et de mise en forme d'une adresse (AB), cette adresse comprenant une première partie (A) constituée d'un nombre q de bits, q étant le nombre de bits de chaque symbole, et une seconde partie (B) constituée d'un nombre r de bits avec r=log₂S, où S désigne le nombre de séquences dans un jeu de séquences, l'adresse (AB) comprenant ainsi un nombre p de bits avec p=q+log₂S,
- une sortie (26) délivrant cette adresse (AB) pour chaque entrée d'un symbole (Sij) appliqué aux moyens (20),
b) une table de séquences (30) comprenant un nombre L de blocs (avec L=2^{q}), chaque bloc mémorisant un jeu de S séquences, cette table étant adressée par l'adresse délivrée par les moyens de comptage et d'adressage, la première partie (A) de l'adresse sélectionnant un jeu parmi L et la seconde partie (B) de l'adresse une séquence parmi S dans ce jeu.

## Claims

1. A generator of repetitive sets of spreading sequences for the transmission of symbols by spectrum spreading, **characterized in that** it comprises:
a) means of counting and forming an address (20), comprising:
- an input (22) receiving the symbols to be processed (Sij),
- a synchronization input (24) receiving pulses (Hs) synchronized with the symbols,
- means of counting the number of received symbols and of forming an address (AB), said address (1) comprising a first part (A) composed of a number q of bits, where q is the number of bits of each symbol, and a second part (B) composed of a number r of bits where r=log₂S, where S denotes the number of sequences in a set of sequences, the address (AB) thus comprising a number p of bits where p=q+log₂S,
- an output (26) outputting said address (AB) for every input of a symbol (Sij) applied to the means (20),
b) a table of sequences (30) comprising a number L of blocks (where L=2^{q}), each block memorizing a set of S sequences, said table being addressed by the address output by the means of counting and addressing, the first part (A) of the address selecting one set among L, and the second part (B) of the address selecting a sequence among S in this set.

## Patentansprüche

1. Generator für sich wiederholende Sätze von Spreiz-Sequenzen für die Übertragung von Symbolen mittels Spektrumspreizung, **dadurch gekennzeichnet, dass** er aufweist:
a) Mittel zum Zählen und Formatieren einer Adresse (20), aufweisend:
- einen Eingang (22), der die zu verarbeitenden Symbole (Sij) empfängt,
- einen Synchronisierungs-Eingang (24), der mit den Symbolen synchronisierte Impulse (Hs) empfängt,
- Mittel zum Zählen der Anzahl empfangener Symbole und zum Formatieren einer Adresse (AB), wobei die Adresse aufweist: einen ersten Teil (A), der aus einer Anzahl q von Bits gebildet ist, wobei q die Anzahl von Bits von jedem Symbol ist, und einen zweiten Teil (B), der aus einer Anzahl r von Bits mit r=log₂S gebildet ist, wobei S die Anzahl von Sequenzen in einem Sequenz-Satz bezeichnet, wobei die Adresse (AB) somit eine Anzahl p von Bits mit p=q+log₂S aufweist,
- einen Ausgang (26), der die Adresse (AB) für jeden Eingang eines auf die Mittel (20) angewendeten Symbole (Sij) ausgibt,
b) eine Sequenztabelle (30), die eine Anzahl L von Blocks aufweist, (wobei L=2^{q}), wobei jeder Block einen Satz von S Sequenzen speichert, wobei die Tabelle durch die Adresse adressiert ist, die von den Mitteln zum Zählen und Adressieren ausgegeben wird, wobei der erste Teil (A) der Adresse einen Satz aus L auswählt, und wobei der zweite Teil (B) der Adresse eine Sequenz aus S in diesem Satz auswählt.
